# EUROPEAN PATENT SPECIFICATION

(11) **EP 0 467 479 B1**
(45) Date of publication and mention of the grant of the patent: **06.11.1996**
(21) Application number: 91201890.0
(22) Date of filing: 17.07.1991
(51) Int. Cl.: G01N 27/414, G01N 27/403

(54) **Device for measuring the concentration of a chemical substance in fluid**
Vorrichtung zur Messung der Konzentration einer chemischen Substanz in einer Flüssigkeit
Appareil pour la mesure de la concentration d'une substance chimique dans un fluide

(30) Priority: 17.07.1990 NL 9001628
(43) Date of publication of application: 22.01.1992
(73) Proprietor: PRIVA AGRO HOLDING B.V., 2678 ZG De Lier (NL)
(72) Inventor: van den Vlekkert, Hendrik Harmen, NL-2678 PJ De Lier (NL); van Erp, Wilhelmus Petrus Martinus Maria, NL-9351 KS Leek (NL)
(74) Representative: Hoijtink, Reinoud

(56) References cited:
- EP-A- 0 027 256
- EP-A- 0 174 712
- EP-A- 0 192 488
- EP-A- 0 215 546
- EP-A- 0 300 641
- FR-A- 2 400 258
- GB-A- 2 165 393
- PATENT ABSTRACTS OF JAPAN, vol. 9, no. 37 (P-335)[1760], 16th February 1985; & JP-A-59 178 353

## Description

The invention relates to a device for measuring the concentration of a chemical substance in fluid.

Such devices can contain for instance a field effect transistor as measuring unit. Field effect transistors are electronic components which can amplify a signal. They are constructed from an electrode which supplies electrons (the source), an electrode which receives electrons (the drain), a region located there between through which the electron flow passes (the channel) and a control electrode (the gate) with which the electron flow can be influenced using an electrical field dependent on the signal. The transporting medium through which the electron flow passes is a semiconductor in the case of field effect transistors. The measuring surface of the semiconductor is formed by source, drain and gate. The source and drain are connected to electrical conductors.

For optimal functioning the electrical conductors of a field effect transistor must be insulated from the environment and each other. Particularly in the case of chemical field effect transistors, whereof the gate is in contact with a liquid from which the signal emanates, such an insulation is very much a requirement. In known transistors the electrical conductors connected to source and drain are generally moulded into a synthetic resin for this purpose, wherein the gate region must remain free. Various problems arise here.

Firstly, in view of the dimensions of the transistor, it is often difficult to keep the gate region meticulously free of the synthetic resin. The electrical conductors, which are situated on the same side of the field effect transistor as the gate region, are therefore attached in the known devices as far away from the gate region as possible. In addition, channels can be formed between the synthetic resin and the transistor under the influence of the liquid, through which channels the liquid can reach the portions of the transistor located outside the gate. Insulation is then no longer adequate.

The invention has for its object to provide a device for measuring the concentration of a chemical substance in fluid, wherein the above stated drawbacks are avoided.

This is achieved with the invention by a device with a semiconductor comprising a measuring surface, the impedance magnitude of which alters on contact of the surface with the chemical substance, which semiconductor is arranged in a housing in which is arranged a flow channel for the fluid, and wherein the measuring surface forms part of the wall of the channel, and which semiconductor is provided with electrical conductors for conducting the measuring signals wherein the semiconductor is replaceable and the measuring surface is sealed relative to the housing by means of a releasable sealing element. The electrical conductors are therein incorporated in the housing and are sealed off from the fluid making contact with the measuring surface by the releasable sealing element.

The Japanese patent publication 59-178353 discloses a flow-type semiconductor chemical sensor in which a CHEMFET is fitted to and molded integrally in a cell which is provided with inflow and outflow channels for a liquid sample. The semiconductor is not releasable from the housing.

The French patent application 2 400 258 also discloses a CHEMFET in which the semiconductor is irreplaceably sealed in the housing.

The releasable sealing element is preferably an O-ring. Due to the mechanical contact the measuring surface is adequately insulated from the rest of the housing.

In a preferred embodiment of the invention the electrical conductors are attached to the side of the semiconductor remote from the measuring surface. A semiconductor wherein the electrical conductors are fixed to the side facing the measuring surface would be relatively large because the conductors, in respect of the insulation thereof, must be placed outside the sealing element. This entails high costs.

The electrical conductors can for instance be wire-form and be adhered by means of conducting adhesive to the side of the semiconductor remote from the measuring surface. For an additional insulation the wire-form electrical conductors can be fixed in the housing by means of nonconducting adhesive.

In a preferred embodiment the electrical conductors are in biased contact with the side of the semiconductor remote from the measuring surface. The conductors may be metal tubes provided with resilient contact points, but may for example also be leaf springs.

The housing preferably consists of two parts, both parts of which are mutually joined by means of screws. The advantage here is that when a semiconductor has to be replaced the housing is still usable. In addition, both parts can be fabricated by means of injection moulding. The semiconductor can be placed therein afterwards. The semiconductor is hereby not adversely affected by the injection moulding process parameters. This is of importance for instance when the semiconductor contains an organic membrane.

In preference the two parts are mutually fastened by means of a bayonet connection. The rotation movement involved in mutually attaching both house portions ensures a good sealing between the measuring surface and the housing.

The materials of housing and sealing element are chosen such that the whole can be sterilized. This can optionally take place in situ making use of steam, for instance at 130°C for 14 minutes.

A number of devices according to the invention can be unified into an assembly, wherein the flow channels are mutually connected. The advantage of such an assembly is that the concentrations of different chemical substances can be measured in one and the same fluid flow.

Further details and features will become apparent from the annexed drawings, in which:
fig. 1 shows a partly broken away perspective view of a first embodiment of two devices according to the invention;
fig. 2 is a partly broken away perspective view of a second embodiment of a number of devices according to the invention; and
fig. 3 is a partly broken away perspective view of an assembly of devices according to the invention.

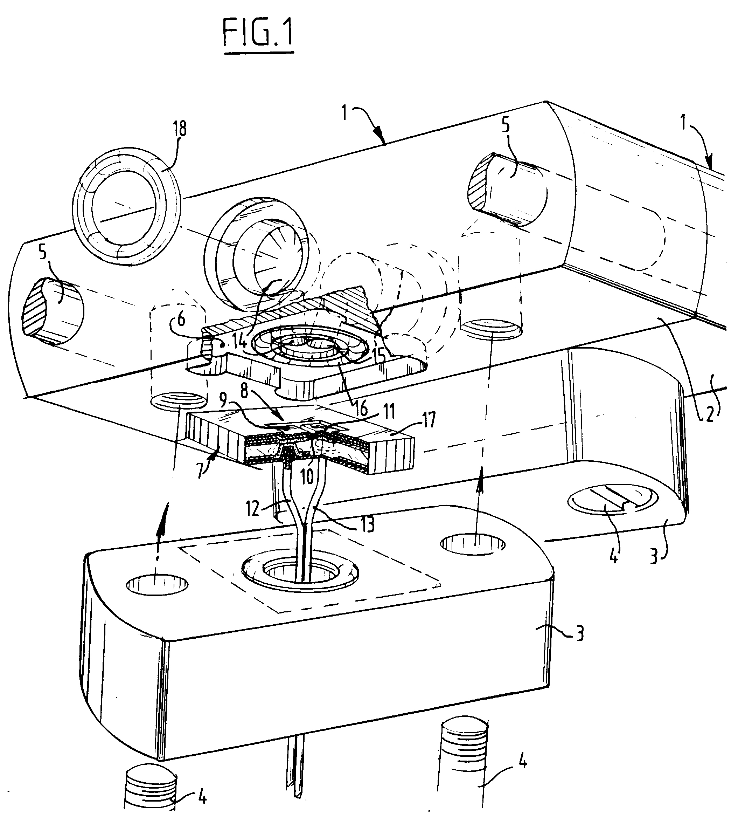

Fig. 1 shows two devices according to the invention 1 which each consist of two housing parts 2 and 3 mutually connectable by means of screws 4. Individual devices 1 are mutually connectable using rod-like elements 5. House portion 2 contains a recess 6 in which a semiconductor 7 can be close-fittingly received. Semiconductor 7 has a measuring surface 8 consisting of a source region 9, a gate region 10 and a drain region 11. The source 9 and drain 11 are joined to electrical conductors 12 and 13 respectively. The semiconductor can be placed in contact with fluid by means of a flow channel constructed from feed channels 14 and discharge channels 15. The measuring surface 8 forms part of the wall of the flow channel. An O-ring provides the sealing of the measuring surface 8 relative to the portion 17 of the semiconductor 7 located outside the ring. An O-ring 18 provides the sealing between mutually connecting feed and discharge channels.

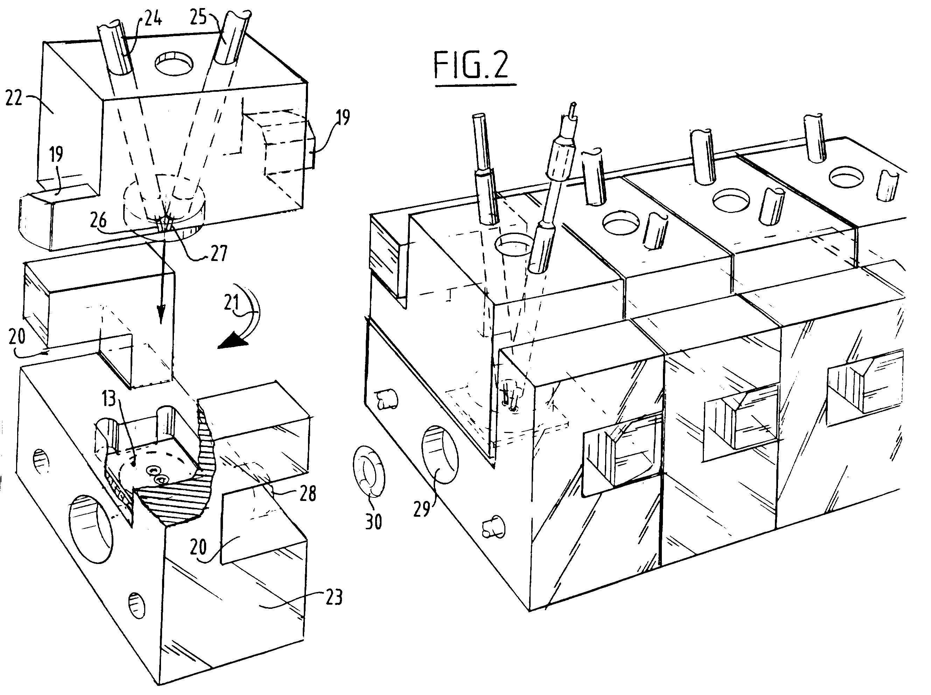

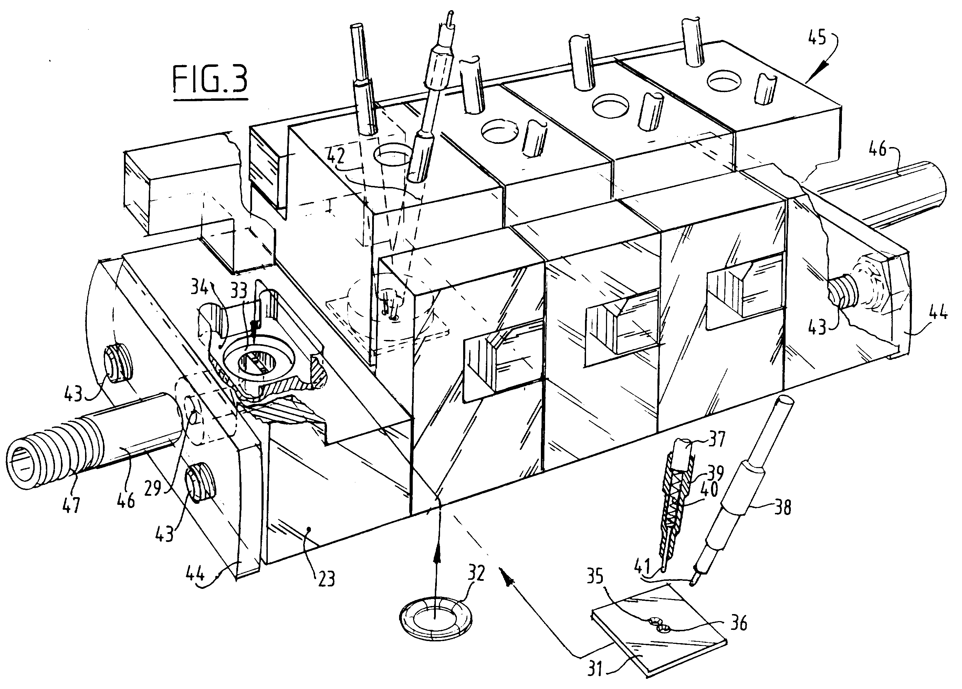

Fig. 2 shows a second embodiment of the invention. House portions 22 and 23 are mutually connected by means of a bayonet fitting. For this purpose housing portion 22 contains protrusions 19 and housing portion 23 recesses 20. The connection is effected by means of a turning movement according to arrow 21. The electrical conductors 24, 25 are tubular. The contact with the semiconductor 31 takes place via resilient contacts 26, 27 (see fig. 3).

A plurality of devices can be mutually attached, wherein the sealing between mutually connecting feed and discharge channels 29 and 28 respectively is provided by the O-ring 30.

Fig. 3 shows several details of the device of fig. 2. An O-ring 32 fits into a round recess 33 in house part 23. The semiconductor 31 is placed on the O-ring 32 into a substantially square recess 34. The contact points 35 and 36 of the source and drain respectively are in contact with tubular electrical conductors 37 and 38 respectively. The conductors 37, 38 are built up of a housing 39 in which the contacts 41 are resiliently received via interposing of a spring 40. The electrical conductors 37, 38 are themselves situated in tubular recesses 42 in house portion 22.

Five devices connected to each other by means of screw elements 43 and end pieces 44 form an assembly 45. The feed and discharge channel 29 communicates with the outside environment via tubular elements 46 which are optionally provided with screw thread 47 for connection thereto of feed and discharge conduits for fluid (not shown).

## Claims

1. Device for measuring the concentration of a chemical substance in fluid, comprising a semiconductor (7;31) containing a measuring surface (8) the impedance magnitude of which alters on contact of the surface with the chemical substance, which semiconductor is arranged in a housing in which is arranged a flow channel (14,15; 28,29) for the fluid and wherein the measuring surface (8) forms part of the wall of the channel and which semiconductor is provided with electrical conductors (12,13; 24,25 ; 37,38) for conducting the measuring signals, **characterized in that** the semiconductor is replaceable and the measuring surface (8) is sealed relative to the housing by means of a releasable sealing element (16).

2. Device as claimed in claim 1, **characterized in that** the releasable sealing element is an O-ring.

3. Device as claimed in claims 1-2, **characterized in tha**t the electrical conductors are attached to the side of the semiconductor remote from the measuring surface.

4. Device as claimed in claims 1-3, **characterized in that** the electrical conductors are adhered to the side of the semiconductor remote from the measuring surface.

5. Device as claimed in claims 1-4, **characterized in that** the electrical conductors are in biased contact with the side of the semiconductor remote from the measuring surface.

6. Device as claimed in claims 1-5, **characterized in that** the housing consists of two parts which are mutually fastened by means of a bayonet connection.

7. Device as claimed in any of the foregoing claims, **characterized in that** the device is manufactured from material resistant to sterilization temperatures.

8. Assembly of devices as claimed in any of the foregoing claims, **characterized in that** the flow channels are mutually connected.

## Patentansprüche

1. Vorrichtung zur Messung der Konzentration einer chemischen Substanz in einer Flüssigkeit, welche Vorrichtung einen Halbleiter (7) mit einer Meßoberfläche (8) aufweist, dessen Impedanzwert sich bei Berührung der Oberfläche mit der chemischen Substanz ändert, wobei der Halbleiter in einem Gehäuse untergebracht ist, in dem ein Strömungskanal (14; 15; 28, 29) für die Flüssigkeit angeordnet ist, wobei die Meßoberfläche (8) einen Teil der Wand des Kanals bildet und der Halbleiter mit elektrischen Leitern (12; 13; 24, 25; 37, 38) versehen ist, um die Meßsignale weiterzuleiten,
dadurch gekennzeichnet, daß der Halbleiter auswechselbar ist und die Meßoberfläche (8) relativ zu dem Gehäuse mittels eines auswechselbaren Dichtungselementes (16) abgedichtet ist.

2. Vorrichtung nach Anspruch 1,
dadurch gekennzeichnet, daß das auswechselbare Dichtungselement ein O-Ring ist.

3. Vorrichtung nach den Ansprüchen 1 und 2,
dadurch gekennzeichnet, daß die elektrischen Leiter an jener Seite des Halbleiters angeordnet sind, die der Meßoberfläche abgewandt ist.

4. Vorrichtung nach den Ansprüchen 1 bis 3,
dadurch gekennzeichnet, daß die elektrischen Leiter auf der Seite des Halbleiters angeklebt sind, die der Meßoberfläche abgewandt ist.

5. Vorrichtung nach den Ansprüchen 1 bis 4,
dadurch gekennzeichnet, daß die elektrischen Leiter in Kontaktberührung mit jener Seite des Halbleiters vorgespannt sind, die der Meßoberfläche abgewandt ist.

6. Vorrichtung nach den Ansprüchen 1 bis 5,
dadurch gekennzeichnet, daß das Gehäuse aus zwei Teilen besteht, die über einen Bajonettverschluß miteinander verbunden sind.

7. Vorrichtung nach einem der vorhergehenden Ansprüche,
dadurch gekennzeichnet, daß die Vorrichtung aus einem Material hergestellt ist, welches gegenüber Sterilisationstemperaturen widerstandsfähig ist.

8. Aufbau von Vorrichtungen nach einem der vorhergehenden Ansprüche,
dadurch gekennzeichnet, daß die Strömungskanäle miteinander verbunden sind.

## Revendications

1. Appareil pour la mesure de la concentration d'une substance chimique dans un fluide, comprenant un semi-conducteur (7 ; 31) contenant une surface de mesure (8) dont la grandeur d'impédance se modifie lors du contact entre la surface et la substance chimique, ce semi-conducteur étant placé dans un logement dans lequel est prévu un canal de circulation (14 ; 15 ; 28 ; 29) pour le fluide et dans lequel la surface de mesure (8) fait partie de la paroi du canal, et ce semi-conducteur étant pourvu de conducteurs électriques (12 ; 13 ; 24 ; 25 ; 37 ; 38) destinés à conduire les signaux de mesure, caractérisé en ce que le semi-conducteur est remplaçable et la surface de mesure (8) est rendue étanche vis-à-vis du logement au moyen d'un élément d'étanchéité amovible.

2. Appareil selon la revendication 1, caractérisé en ce que l'élément d'étanchéité amovible est un joint torique.

3. Appareil selon l'une des revendications 1 et 2, caractérisé en ce que les conducteurs électriques sont fixés sur le côté du semi-conducteur éloigné de la surface de mesure.

4. Appareil selon l'une des revendications 1 à 3, caractérisé en ce que les conducteurs électriques sont collés sur le côté du semi-conducteur éloigné de la surface de mesure.

5. Appareil selon l'une des revendications 1 à 4, caractérisé en ce que les conducteurs électriques sont en contact contraint avec le côté du semi-conducteur éloigné de la surface de mesure.

6. Appareil selon l'une des revendications 1 à 5, caractérisé en ce que le logement est constitué de deux parties qui sont fixées entre elles au moyen d'un raccord à baïonnette.

7. Appareil selon l'une des revendications précédentes, caractérisé en ce que l'appareil est fabriqué à partir de matériau résistant aux températures de stérilisation.

8. Assemblage d'appareils selon l'une ou l'ensemble des revendications précédentes, caractérisé en ce que les canaux de circulation communiquent entre eux.
